# DEMANDE DE BREVET EUROPEEN

(11) **EP 1 964 746 A1**
(43) Date de publication de la demande: **03.09.2008**
(21) Numéro de dépôt: 08305029.4
(22) Date de dépôt: 20.02.2008
(51) Int. Cl.: B60W 10/18, B60W 30/14

(54) **Unite de pilotage de moteur de vehicule integrant un regulateur et/ou un limiteur de vitesse, et pouvant interagir avec un systeme de freinage pilote**

(30) Priorité: 27.02.2007 FR 0753540
(71) Demandeur: PEUGEOT CITROËN AUTOMOBILES S.A., 78140 Vélizy Villacoublay (FR)
(72) Inventeur: Fradin, Loïc, 94240, L'Hay les Roses (FR); Grill, Andréas, 78330 Fontenay Le Fleury (FR)

(57) **Abrégé**

L'invention concerne une unité de pilotage de moteur de véhicule automobile comprenant un régulateur/et ou un limiteur de vitesse.

L'unité (UPM) de pilotage du moteur intègre un régulateur et/ou un limiteur de la vitesse du véhicule pour l'amener ou la maintenir en deçà ou au niveau d'une vitesse de consigne (Vc), en pilotant le moteur du véhicule pour qu'il délivre un couple (Cm). Cette unité (UPM) comprend une sortie de commande d'un système de freinage du véhicule pour piloter un effet additionnel de freinage lorsque le couple de frein moteur (Cm) pouvant être délivré par le moteur est insuffisant pour ramener ou maintenir la vitesse en deçà de la vitesse de consigne (Vc).

L'invention s'applique au domaine de la sécurité de conduite.

## Description

L'invention concerne un régulateur ou un limiteur de vitesse de véhicule automobile, permettant de piloter automatiquement le moteur et éventuellement la boîte de vitesses du véhicule pour que la vitesse du véhicule corresponde au mieux à une vitesse de consigne choisie par le conducteur.

Dans le cas d'un régulateur, le moteur est piloté pour amener puis maintenir la vitesse à la valeur de la vitesse de consigne. Parmi différents moyens de désactivation, on peut noter que pour des raisons de sécurité le régulateur est désactivé lorsque le conducteur enfonce la pédale de frein.

Dans le cas d'un limiteur, le moteur est piloté seulement pour que la vitesse du véhicule ne dépasse pas la valeur de consigne, mais le véhicule peut rouler à une vitesse inférieure à la valeur de consigne, et le conducteur peut freiner sans que cela désactive le limiteur, ce qui est mieux adapté par exemple à une conduite en ville.

Lorsque le véhicule est dans une pente descendante, le régulateur ou le limiteur pilote le moteur en jouant par exemple sur l'injection et/ou d'alimentation en carburant, pour qu'il délivre un couple résistant, c'est-à-dire pour qu'il fonctionne en frein moteur.

Mais l'amplitude du couple de frein moteur est limitée, de sorte que dans une forte descente, le frein moteur peut être insuffisant pour amener ou maintenir la vitesse du véhicule au niveau de la consigne de vitesse.

D'autre part, lorsque le conducteur réduit la valeur de la vitesse de consigne, le temps de réaction pour ramener la vitesse du véhicule au niveau de la nouvelle vitesse de consigne est relativement long si l'on utilise uniquement le frein moteur.

Ainsi, lorsque le conducteur utilise le régulateur ou le limiteur, certaines situations l'obligent à agir lui-même sur les freins pour respecter la vitesse de consigne.

Avec un véhicule équipé d'un système de freinage piloté, par exemple du type bloc hydraulique ESP (du nom de la fonction « Electronic Stability Program » qu'il assure parmi d'autres), le régulateur ou le limiteur pilote le système de freinage lorsque l'amplitude du couple de frein moteur est insuffisante, ce qui permet de réguler ou limiter efficacement la vitesse en toute situation.

Afin de réduire les coûts de fabrication, le régulateur ou limiteur de vitesse est intégré à un calculateur existant équipant le véhicule automobile.

Dans le cas d'un véhicule dépourvu de système de freinage piloté, le régulateur ou limiteur de vitesse est intégré à l'unité de pilotage du moteur, celle-ci étant elle-même reliée à une Interface Homme-Machine, par exemple via un réseau multiplexé de type CAN du véhicule.

Dans le cas d'un véhicule équipé d'un système de freinage piloté, le régulateur est intégré à l'unité de pilotage de ce système de freinage, celle-ci étant reliée à une entrée de pilotage en couple de l'unité de pilotage du moteur.

Dans le cadre de la production sur une même ligne de production, d'un modèle de véhicule dans une déclinaison sans système de freinage piloté et dans une autre déclinaison avec système de freinage piloté, il est donc nécessaire de prévoir un type de calculateur moteur pour chaque déclinaison.

Le but de l'invention est de proposer une solution de régulation et/ou de limitation de vitesse ne nécessitant pas d'adaptation spécifique de l'unité de pilotage du moteur.

A cet effet, l'invention a pour objet une unité de pilotage de moteur de véhicule automobile intégrant un régulateur et/ou un limiteur de la vitesse du véhicule pour l'amener ou la maintenir en deçà ou au niveau d'une vitesse de consigne, en pilotant le moteur du véhicule pour qu'il délivre un couple, cette unité comprenant une sortie de commande d'un système de freinage du véhicule pour piloter un effet additionnel de freinage lorsque le couple de frein moteur pouvant être délivré par le moteur est insuffisant pour ramener ou maintenir la vitesse en deçà de la vitesse de consigne.

L'invention concerne également une unité de pilotage telle que définie ci-dessus, comprenant un module de détermination d'une accélération à appliquer au véhicule pour ramener ou maintenir sa vitesse en deçà ou au niveau de la vitesse de consigne, un module arbitrant cette consigne d'accélération avec les besoins d'autres fonctions et/ou les demandes du conducteur, un module de répartition déterminant des parts d'accélération allouées respectivement au frein moteur et au système de freinage, ainsi qu'un module pilotant le moteur pour qu'il délivre un couple correspondant à la part d'accélération allouée au frein moteur.

L'invention concerne également une unité de pilotage telle que définie ci-dessus, comprenant un module de régulation de la part d'accélération devant être fournie par le moteur.

L'invention concerne également un régulateur comprenant une unité de pilotage du moteur telle que définie ci-dessus, et une unité de pilotage d'un système de freinage reliée à la sortie de commande d'un système de freinage du véhicule de l'unité de pilotage du moteur.

L'invention concerne également un régulateur tel que défini ci-dessus, comprenant une unité de pilotage du moteur selon la revendication 2, et un module de pilotage de la pression de freinage, intégré à l'unité de pilotage du système de freinage pour qu'il délivre un couple de freinage correspondant à la part d'accélération qui lui est allouée.

L'invention concerne également un régulateur tel que défini ci-dessus, comprenant un module de régulation de la part d'accélération devant être fournie par le système de freinage.

L'invention concerne également un régulateur tel que défini ci-dessus, dans lequel l'unité de pilotage du système de freinage comprend une sortie d'activation de feux stop.

L'invention sera maintenant décrite plus en détail, et en référence aux figures annexées.
La figure 1 est une représentation schématique de l'invention ;
La figure 2 est une représentation schématique d'une variante de l'invention.

L'idée à la base de l'invention est de concevoir une unité de pilotage du moteur intégrant un régulateur et/ou un limiteur de vitesse avec une sortie de commande d'un système de freinage piloté.

Lorsque cette unité de pilotage du moteur est montée sur un véhicule équipé d'un système de freinage piloté, la sortie de commande est reliée au système de freinage pour le solliciter lorsque le couple de frein moteur est insuffisant pour réguler ou limiter la vitesse.

Lorsque cette unité de pilotage du moteur est montée sur un véhicule dépourvu de système de freinage piloté, la sortie de commande n'est simplement reliée à rien. Dans ce cas, le régulateur et/ou limiteur de vitesse régule ou limite la vitesse du véhicule tant que le couple de frein moteur est suffisant.

Cette même unité peut donc être indifféremment montée sur l'une ou l'autre déclinaison d'un véhicule, sans qu'il soit nécessaire de la modifier ni de l'adapter : sur un véhicule dépourvu de système de freinage piloté, la sortie de commande n'est simplement pas exploitée.

L'unité de pilotage du moteur est par exemple un calculateur comprenant un processeur et des moyens de mémoire dans lesquels sont enregistrés un ou plusieurs programmes de pilotage. Cette unité est reliée à d'autres organes, capteurs et actionneurs du véhicule, par liaison filaire, ou bien via un réseau de communication (typiquement, un réseau CAN) du véhicule.

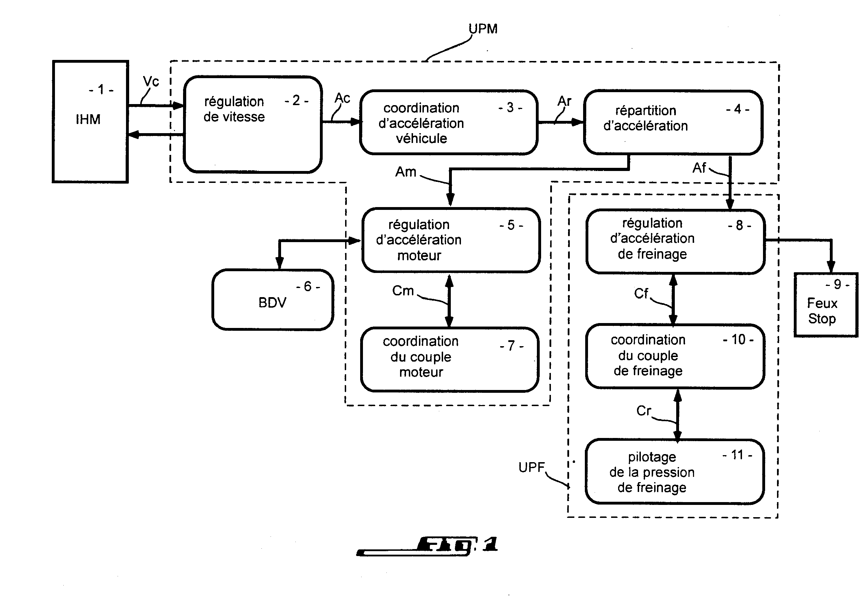

L'unité de pilotage du moteur selon l'invention est reliée à un module dit d'Interface Homme Machine représentée par le bloc repéré par 1 dans la figure 1, comprenant typiquement une commande au volant et un afficheur.

La commande au volant permet essentiellement au conducteur d'activer ou de désactiver le limiteur ou le régulateur et de choisir la vitesse de consigne. L'afficheur informe le conducteur de l'état désactivé ou activé du limiteur ou du régulateur ainsi que de la valeur de la vitesse de consigne choisie.

L'unité de pilotage du moteur, repérée par UPM, comprend cinq modules pour déterminer l'accélération à appliquer au véhicule, pour piloter le moteur afin qu'il génère le couple approprié, et pour piloter le cas échéant le système de freinage lorsque la situation l'impose (couple de frein moteur insuffisant).

Chaque module correspond par exemple à une fonction programmée dans l'unité de pilotage du moteur.

Un module de régulation de vitesse, repéré par 2, recueille principalement les informations issues du module d'Interface Homme Machine, à savoir l'état d'activation du régulateur ou du limiteur avec la vitesse de consigne Vc choisie, ainsi que les informations représentatives de la vitesse effective du véhicule. Ce module de régulation détermine une accélération Ac à appliquer au véhicule pour respecter la vitesse de consigne Vc, lorsque la régulation ou la limitation est activée.

Il est à noter que le terme accélération est utilisé ici dans son sens général : lorsque le véhicule ralentit, il est soumis à une accélération qui est négative.

La valeur d'accélération Ac issue du module de régulation de vitesse est reçue par un module de coordination de l'accélération du véhicule, correspondant au bloc repéré par 3.

Ce module effectue un arbitrage entre la valeur d'accélération Ac issue du bloc 2 et une demande d'accélération demandée par d'autres fonctions ou par le conducteur, correspondant par exemple à l'inclinaison de la pédale d'accélérateur. Ce module assure également certaines contraintes sur la consigne d'accélération, et les transitions pour assurer que les évolutions de l'accélération résultante Ar respectent le confort et la sécurité des occupants du véhicule ainsi que des organes du véhicule. Il délivre une valeur d'accélération résultante notée Ar.

L'accélération résultante Ar est transmise à un module de répartition d'accélération correspondant au bloc 4, qui détermine la part de l'accélération Ar qui doit être générée par le groupe motopropulseur, notée Am, et la part qui doit être générée par le système de freinage, notée Af.

La valeur d'accélération Am à générer par le groupe motopropulseur est traitée par un module de régulation d'accélération moteur, correspondant au bloc 5.

Ce module régule l'accélération Am issue du bloc 5 pour générer une consigne de couple moteur Cm qui fluctue dans des proportions acceptables par les organes du véhicule.

Dans le cas où le véhicule est équipé d'une boîte de vitesses automatique ou robotisée telle que celle représentée par le bloc 6, ce module peut également la commander, par exemple pour rétrograder.

La consigne de couple moteur Cm est traitée par un module de coordination de couple moteur, représenté par le bloc 7. Ce module coordonne la demande de couple Cm et les demandes de couple moteur issues des autres fonctions auxquelles le moteur contribue, pour respecter les impératifs de confort et de sécurité des occupants du véhicule, ainsi que des organes du véhicule

Par exemple, lors d'un changement de rapport avec une boîte de vitesses automatique ou robotisée, c'est ce module qui détermine que la consigne de couple devant être suivie par le moteur durant le changement de rapport est prioritaire sur la consigne de couple Cm.

Dans le cas d'un véhicule équipé d'un système de freinage piloté, par exemple de type bloc hydraulique ESP, c'est à dire dans lequel le freinage peut être commandé, la sortie de commande Af est connectée à une unité de pilotage du système de freinage piloté, représentée par le bloc UPF.

Cette unité de pilotage est par exemple un calculateur de freinage comprenant un processeur et des moyens de mémoire dans lesquels sont enregistrés des programmes. Elle est reliée à l'unité de pilotage du moteur, par liaison filaire, par réseau de type CAN ou autre.

Cette unité UPF comprend un module de régulation de l'accélération Af devant être fournie par le système de freinage, correspondant au bloc 8. Ce module régule la consigne d'accélération Af pour éviter qu'elle ne fluctue dans des proportions trop importantes, et il génère une consigne de couple de freinage Cf adaptée aux impératifs de confort et de sécurité des occupants du véhicule, ainsi qu'aux organes du véhicule.

Comme visible dans la figure 1, ce module est apte à commander au bloc 9 pour provoquer l'allumage des feux stop du véhicule lorsque par exemple un freinage automatique a lieu entrainant une décélération au-delà d'un certain seuil, conformément à la législation en vigueur.

Le couple de freinage Cf est transmis à un module de coordination de couple de freinage, repéré par 10, qui assure la coordination entre la demande de couple de freinage Cf issue du module 8 et les autres demandes de couple de freinage impliquant le système de freinage.

Par exemple, en situation d'urgence, l'ESP agit sur les freins pour corriger la trajectoire du véhicule, de sorte que la consigne Cf correspondant à la régulation ou la limitation de vitesse n'est alors pas prise en compte puisque les consignes de freinage destinées à la correction de trajectoire sont alors prioritaires.

Le module de coordination 10 assure également une adaptation du couple de freinage pour respecter le confort et la sécurité des occupants ainsi que des organes du véhicule, notamment en évitant que le couple de freinage ne fluctue dans des proportions trop importantes.

Le module 10 établit une ou plusieurs valeurs de couple de freinage régulé notées Cr qui sont transmises à un module de pilotage de la pression de freinage, correspondant au bloc 11.

Partant de chaque consigne de freinage Cr, le module 11 pilote la pression de freinage à chaque roue du véhicule, en respectant les conditions et règles appropriées en terme de répartition de cette pression, par exemple entre l'avant et l'arrière du véhicule afin d'éviter certains transferts de masse.

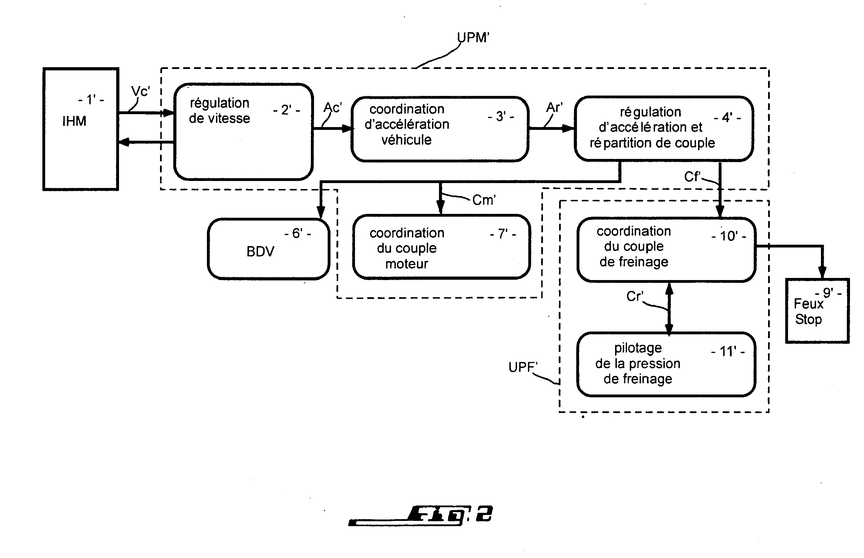

Selon un second mode de réalisation de l'invention représenté en figure 2, l'implémentation du régulateur est simplifiée en regroupant le module de régulation de l'accélération du moteur et le module de régulation de l'accélération de freinage.

Comme représenté dans la figure 2, ceci conduit à une architecture ressemblant à celle du premier mode de réalisation. Ainsi, les éléments de la figure 2 assurent sensiblement les mêmes fonctions que ceux de la figure 1. Pour faciliter la compréhension, chaque élément de la figure 2 porte la même référence que l'élément lui correspondant dans la figure 1.

Dans ce second mode de réalisation, le module de régulation d'accélération et répartition de couple 4' assure à la fois la régulation de l'accélération véhicule Ar' ainsi que, pour assurer cette régulation, la répartition des consignes de couple Cm' vers le groupe moto-propulseur et/ou Cf' vers le système de freinage.

La consigne de couple Cm' issue du module 4' est directement traitée par le module de coordination de couple moteur 7' qui la convertit en un couple moteur à délivrer, et qui pilote le moteur pour obtenir un couple moteur correspondant soit à la consigne Cm', soit à un autre impératif de couple, imposé par exemple par une procédure de changement de rapport piloté. Dans le cas où le véhicule est équipé d'une boîte de vitesses automatique ou robotisée telle que celle représentée par le bloc 6', la consigne de couple Cm' peut aussi lui être envoyée, par exemple pour adapter le rapport de boite de vitesses.

De façon analogue, la consigne de couple Cf' devant être réalisée par les freins est directement traitée par le module de coordination de couple de freinage 10' qui détermine le couple de freinage Cr' correspondant à cette consigne Cf', soit à un autre impératif, imposé par exemple par une procédure ESP de correction de trajectoire.

L'invention apporte notamment les avantages suivants .

Elle peut être directement implémentée dans l'unité de pilotage du calculateur moteur sans nécessité de modifier spécifiquement ses composants.

La sortie de commande du système de freinage peut par exemple correspondre à une sortie sur un réseau d'informations du véhicule auquel l'unité de pilotage du moteur est connectée. Quoi qu'il en soit, son impact sur l'architecture électrique et électronique du véhicule est quasiment nul.

L'invention n'a aucun impact sur le moteur du véhicule en soi, et ne nécessite donc pas non plus de le modifier.

De manière analogue, son impact au niveau du système de freinage piloté est quasiment nul puisqu'elle peut être implémentée sur une architecture existante d'un système de freinage piloté, et des lois de contrôle commande associées.

## Revendications

1. Unité (UPM) de pilotage de moteur de véhicule automobile intégrant un régulateur et/ou un limiteur de la vitesse du véhicule pour l'amener ou la maintenir en deçà ou au niveau d'une vitesse de consigne (Vc), en pilotant le moteur du véhicule pour qu'il délivre un couple (Cm), cette unité (UPM) comprenant une sortie de commande d'un système de freinage du véhicule pour piloter un effet additionnel de freinage lorsque le couple de frein moteur (Cm) pouvant être délivré par le moteur est insuffisant pour ramener ou maintenir la vitesse en deçà de la vitesse de consigne (Vc), comprenant un module (2) de détermination d'une accélération à appliquer au véhicule pour ramener ou maintenir sa vitesse en deçà ou au niveau de la vitesse de consigne et un module (3) arbitrant cette consigne d'accélération avec les besoins d'autres fonctions et/ou les demandes du conducteur.

2. Unité selon la revendication 1, comprenant un module de répartition (4) déterminant des parts d'accélération allouées respectivement au frein moteur (Am) et au système de freinage (Af), ainsi qu'un module (7) pilotant le moteur pour qu'il délivre un couple (Cm) correspondant à la part d'accélération (Am) allouée au frein moteur.

3. Unité selon la revendication 2, comprenant un module de régulation (5) de la part d'accélération (Am) devant être fournie par le moteur.

4. Régulateur de vitesse de véhicule automobile, comprenant une unité (UPM) de pilotage du moteur selon l'une des revendications précédentes, et une unité (UPF) de pilotage d'un système de freinage reliée à la sortie de commande d'un système de freinage du véhicule de l'unité de pilotage du moteur (UPM).

5. Régulateur selon la revendication 4, comprenant une unité de pilotage du moteur (UPM) selon la revendication 2, et un module (11) de pilotage de la pression de freinage, intégré à l'unité de pilotage (UPF) du système de freinage pour qu'il délivre un couple de freinage (Cf) correspondant à la part d'accélération (Af) qui lui est allouée.

6. Régulateur selon la revendication 5, comprenant un module (8) de régulation de la part d'accélération (Af) devant être fournie par le système de freinage.

7. Régulateur selon la revendication 4, 5 ou 6, dans lequel l'unité de pilotage du système de freinage (APF) comprend une sortie d'activation de feux stop.
